(19) Europäisches Patentamt
European Patent Office
Office européen des brevets

(11) **EP 1 985 004 B1**

(12) **EUROPÄISCHE PATENTSCHRIFT**

(45) Veröffentlichungstag und Bekanntmachung des Hinweises auf die Patenterteilung:
**13.03.2019   Patentblatt 2019/11**

(21) Anmeldenummer: **06819318.4**

(22) Anmeldetag: **08.11.2006**

(51) Int Cl.:
***H02M 3/158*** *(2006.01)*

(86) Internationale Anmeldenummer:
**PCT/EP2006/068204**

(87) Internationale Veröffentlichungsnummer:
**WO 2007/090476 (16.08.2007 Gazette 2007/33)**

(54) **SCHALTNETZTEIL MIT ADAPTIVEN UND VERLUSTFREIEN SCHALTVORGÄNGEN**

SWITCHED-MODE POWER SUPPLY COMPRISING ADAPTIVE AND LOSS-FREE SWITCHING OPERATIONS

BLOC D'ALIMENTATION À DÉCOUPAGE AYANT DES OPÉRATION DE COMMUTATION ADAPTIVES ET SANS AFFAIBLISSEMENT

(84) Benannte Vertragsstaaten:
**DE FR GB IT**

(30) Priorität: **09.02.2006   DE 102006005853**

(43) Veröffentlichungstag der Anmeldung:
**29.10.2008   Patentblatt 2008/44**

(73) Patentinhaber: **Robert Bosch GmbH
70442 Stuttgart (DE)**

(72) Erfinder:
• **STREB, Dieter
  72589 Westerheim (DE)**
• **HEUSEL, Jochen
  72768 Reutlingen (DE)**
• **NEUBURGER, Martin
  73312 Geislingen (DE)**

(56) Entgegenhaltungen:
EP-A- 0 631 372     DE-A1- 19 853 626
US-A- 4 931 716     US-B1- 6 924 630

EP 1 985 004 B1

**Beschreibung**

Die Erfindung betrifft ein Schaltnetzteil gemäß dem Anspruch 1, sowie ein Verfahren zum Betreiben eines Schaltnetzteils gemäß Anspruch 7.

Schaltnetzteile dienen zum Wandeln einer elektrischen Eingangsgröße, insbesondere einer Gleichspannung oder eines Gleichstroms, in eine entsprechende Ausgangsgröße. Die hier betrachteten Schaltnetzteile umfassen eine Induktivität und mehrere Schalter, mit denen die Induktivität abwechselnd gegen ein Versorgungspotential und ein Referenzpotential (meist Masse) geschaltet wird. Die Schalter werden üblicherweise von einem Spannungsregler angesteuert, der die Ausgangsspannung oder den Ausgangsstrom regelt.

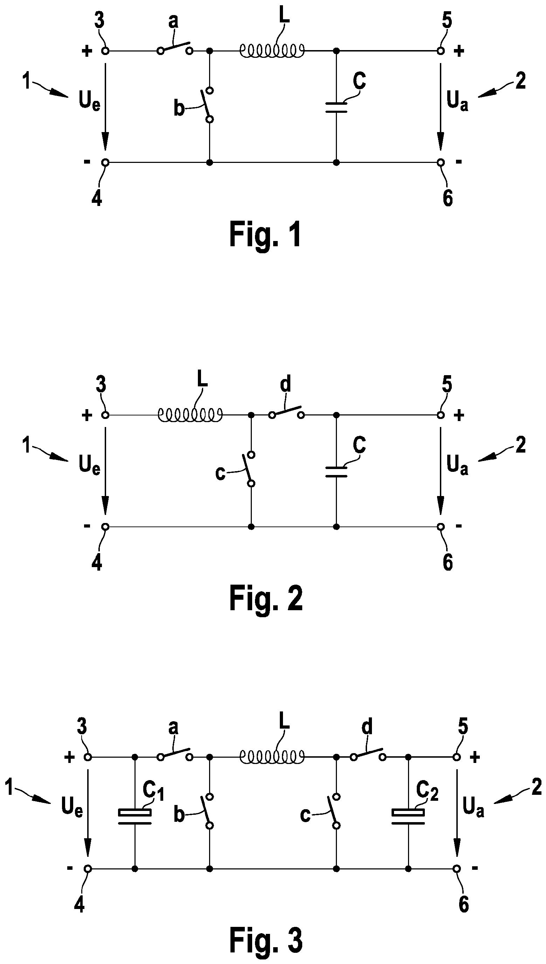

In den Fig. 1 und Fig. 2 sind zwei Grundformen von Gleichspannungswandlern dargestellt, wie sie häufig in Schaltnetzteilen eingesetzt werden. Dabei zeigt Fig. 1 einen getakteten Abwärts-Wandler und Fig. 2 einen getakteten Aufwärts-Wandler, wie sie beispielsweise aus "Tietze/Schenk, Halbleiter-Schaltungstechnik, 11. Auflage, Seiten 979ff, Springer Verlag" bekannt sind.

Der in Fig. 1 dargestellte Abwärts-Wandler wandelt eine an seinem Eingang 1 anliegende Eingangsspannung $U_e$ in eine an seinem Ausgang 2 anliegende Ausgangsspannung $U_a$. Die Ausgangsspannung $U_a$ ist dabei immer kleiner oder maximal gleich groß wie die Eingangsspannung $U_e$. Der Abwärts-Wandler umfasst eine zwischen Eingang 1 und Ausgang 2 geschaltete Induktivität L und zwei Schalter a,b, mit denen die Induktivität L abwechselnd gegen das Eingangspotential 3 (Schalter a) oder ein Bezugspotential, insbesondere Masse (Schalter b) geschaltet werden kann. Ein parallel zum Ausgang 2 geschalteter Glättungskondensator ist mit dem Bezugszeichen C bezeichnet.

Im Betrieb des Wandlers werden die Schalter a,b gegensinnig getaktet und dadurch eine Wechselspannung erzeugt, deren Mittelwert in Abhängigkeit vom Tastverhältnis zwischen der Eingangsspannung $U_e$ und 0 liegt. Für die Ausgangsspannung $U_a$ gilt dabei:

$$U_a = \frac{t_{ein}}{t_{ein} + t_{aus}} \cdot U_e = \frac{t_{ein}}{T} \cdot U_e$$

Dabei ist $t_{ein}$ die Zeitdauer, in der der Schalter a geschlossen (bzw. Schalter b geöffnet) und $t_{aus}$ die Zeitdauer, in der der Schalter a geöffnet ist (bzw. Schalter b geschlossen). Außerdem ist $T = t_1 + t_{aus} = 1/f$ die Periodendauer eines Taktzyklus.

Fig. 2 zeigt einen getakteten Aufwärts-Wandler, der ähnlich aufgebaut ist wie der Wandler von Fig. 1, bei dem jedoch die Schalter c,d am Ausgang 2 des Wandlers angeordnet sind. Der Aufwärts-Wandler erzeugt eine Ausgangsspannung $U_a$, die größer oder gleich groß ist wie die Eingangsspannung $U_e$. Wenn der Schalter d dauerhaft in der geschlossenen Stellung steht, gilt $U_a = U_e$.

Wenn der Schalter c geschlossen ist (Schalter d ist offen), wird in der Induktivität L Energie gespeichert, die zusätzlich an den Ausgang 2 abgegeben wird, wenn sich der Schalter c wieder öffnet und der Schalter d schließt. Am Ausgang 2 können daher höhere Ausgangsspannungen $U_a$ erzeugt werden, als die Eingangsspannung $U_e$. Die Ausgangsspannung $U_a$ ist wiederum abhängig vom Tastverhältnis, wobei gilt:

$$U_a = \frac{T}{t_{aus}} \cdot U_e$$

Aus den in Fig. 1 und Fig. 2 gezeigten Grundschaltungen kann ein Universal-Aufwärts-/Abwärts-Wandler konstruiert werden, wie er beispielsweise in Fig. 3 dargestellt ist. Der Universal-Wandler umfasst im Wesentlichen eine Induktivität L, zwei eingangsseitige Schalter a,b und zwei ausgangsseitige Schalter c,d. Im Abwärtsbetrieb werden die Schalter a,b mit einem vorgegebenen Tastverhältnis gegensinnig getaktet, während der Schalter d dauerhaft geschlossen bleibt. Im Aufwärtsbetrieb werden dagegen die Schalter c und d getaktet, während der Schalter a dauerhaft geschlossen bleibt. Derartige Wandler werden auch als Buck/Boost-Wandler bezeichnet.

Aus dem Stand der Technik bekannte Schaltnetzteile zeigen relativ hohe Schaltverluste und erreichen daher nur relativ kleine Wirkungsgrade. Darüber hinaus ist es wegen der hohen Schaltverluste kaum möglich, höhere Taktfrequenzen zu realisieren. Außerdem sind die EMV-Störemissionen der bekannten Wandler oft problematisch.

Aus der EP 0 631 372 A ist ein Resonanzwandler bekannt, mit dem eine Eingangsspannung in eine Ausgangsspannung gewandelt werden kann. Dabei wird unter Verwendung einer Induktivität sowohl eine Abwärts- wie eine Aufwärtswandlung ermöglicht. Wenigstens einer der Schalter des Resonanzwandlers wird im spannungslosen Zustand geschaltet.

Die DE 198 53 626 A1 zeigt ein Schaltnetzteil mit dem eine Eingangsspannung in eine Ausgangsspannung gewandelt werden kann. Dabei wird unter Verwendung einer Induktivität sowohl eine Abwärts- wie eine Aufwärtswandlung ermöglicht. Das Schaltnetzteil umfasst dazu wenigstens vier Schalter, mit denen die Induktivität gegen ein Referenzpotential oder gegen ein leistungspotential geschaltet werden kann. Alle Schalter werden innerhalb einer Periode geschaltet.

Die US-PS 4,931,716 zeigt ebenfalls einen Resonanz-Wandler, der als Null-SpannungsWandler bezeichnet werden kann. Dabei wird die Betätigungen eines Schaltelements in zweckmäßiger Weise dann vorgenommen, wenn der Strom durch seine antiparallel geschaltete Diode fließt und das Schaltelement selbst spannungsfrei ist.

Es ist daher die Aufgabe der vorliegenden Erfindung, ein Schaltnetzteil mit einem getakteten Buck/Boost-Wandler zu schaffen, das wesentlich geringere Schaltverluste und EMV-Emissionen aufweist und das eine möglichst hohe Leistungsdichte (übertragbare Leistung je Volumeneinheit) bei gleichzeitig hohem Wirkungsgrad erreicht.

Gelöst wird diese Aufgabe gemäß der Erfindung durch die im Patentanspruch 1 sowie im Patentanspruch 7 angegebenen Merkmale. Weitere Ausgestaltungen der Erfindung sind Gegenstand von Unteransprüchen.

Ein wesentlicher Aspekt der Erfindung besteht darin, ein Schaltnetzteil mit einer Induktivität und mehreren Schaltern derart zu betreiben, dass wenigstens einer der Schalter nur in einem Zustand geschaltet wird, in dem er im Wesentlichen spannungsfrei ist. D.h., der Schalter wird nur geschaltet, wenn die über dem Schalter abfallende Spannung gleich Null oder sehr klein ist. Dadurch wird erreicht, dass im Unterschied zum eingangs beschriebenen Stand der Technik keine hohen Leistungen geschaltet werden und die Schaltverluste entsprechend gering sind. Darüber hinaus können dadurch die EMV-Störemissionen minimiert werden. Es wird daher möglich, ein Schaltnetzteil zu bauen, das mit hohen Taktfrequenzen betrieben werden kann, eine hohe Leistungsdichte erreicht und darüber hinaus einen hohen Wirkungsgrad hat.

Gemäß einer bevorzugten Ausführungsform der Erfindung umfasst das Schaltnetzteil eingangsseitig einen ersten Schalter, der die Induktivität gegen ein erstes Versorgungspotential, und einen zweiten Schalter, der die Induktivität gegen ein Bezugspotential (üblicherweise Masse) schaltet, sowie ausgangsseitig einen entsprechenden dritten und vierten Schalter. Anstelle jeweils zweier Schalter am Eingang und Ausgang des Schaltnetzteils könnten beispielsweise auch Wechselschalter vorgesehen sein. Letztere sollen hier auch unter der Bezeichnung "erster und zweiter Schalter" bzw. "dritter und vierter Schalter" zu verstehen sein.

Dieser Wandler wird nun so betrieben, dass wenigstens ein Schalter, vorzugsweise alle Schalter, nur in einem Zustand geschaltet werden, in dem sie im Wesentlichen spannungsfrei sind. Vorzugsweise werden alle Schalter innerhalb einer Taktperiode geschaltet. Die Schalter des erfindungsgemäßen Buck/Boost-Wandlers am Eingang bzw. Ausgang werden im Unterschied zum Stand der Technik außerdem nie gleichzeitig, gegensinnig geschaltet.

Gemäß einer speziellen Ausführungsform der Erfindung umfasst das Schaltnetzteil wenigstens einen ersten und einen zweiten Kondensator, die parallel zum zweiten bzw. dritten Schalter geschaltet sind. Mit Hilfe dieser Kondensatoren kann eine Spannung erzeugt werden, die ein spannungsfreies Schalten der eingangsseitigen oder ausgangsseitigen Schalter ermöglicht.

Das Schaltnetzteil wird vorzugsweise derart betrieben, dass innerhalb einer Taktperiode sowohl positive als auch negative Ströme durch die Induktivität fließen. Dadurch können die vorstehend genannten Kondensatoren umgeladen werden und somit ein spannungsfreies Schalten der Schalter ermöglichen.

Die Schalter werden vorzugsweise derart angesteuert, dass die Induktivität in einer ersten Phase magnetisiert, wenigstens einer der Kondensatoren in einer zweiten Phase umgeladen, und die Induktivität in einer nachfolgenden dritten Phase entmagnetisiert wird.

Der erfindungsgemäße Wandler ist vorzugsweise symmetrisch bezüglich seiner Ein- und Ausgänge aufgebaut.

Die Erfindung wird nachstehend anhand der beigefügten Zeichnungen beispielhaft näher erläutert. Es zeigen:

Fig. 1 einen aus dem Stand der Technik bekannten Abwärts-Wandler;

Fig. 2 einen aus dem Stand der Technik bekannten Aufwärts-Wandler;

Fig. 3 einen aus dem Stand der Technik bekannten Aufwärts-/Abwärts-Wandler;

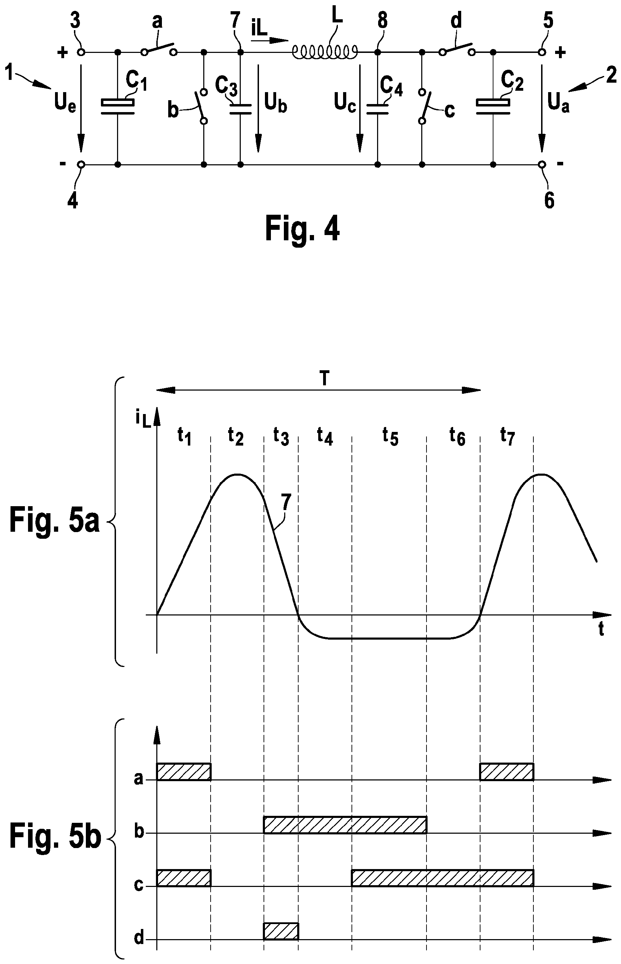

Fig. 4 ein schematisches Schaltbild eines Aufwärts-/Abwärts-Wandlers gemäß einer Ausführungsform der Erfindung;

Fig. 5a den Verlauf des Induktivitätstroms während eines Taktzyklus;

Fig. 5b die Schaltphasen der einzelnen Schalter während eines Taktzyklus;

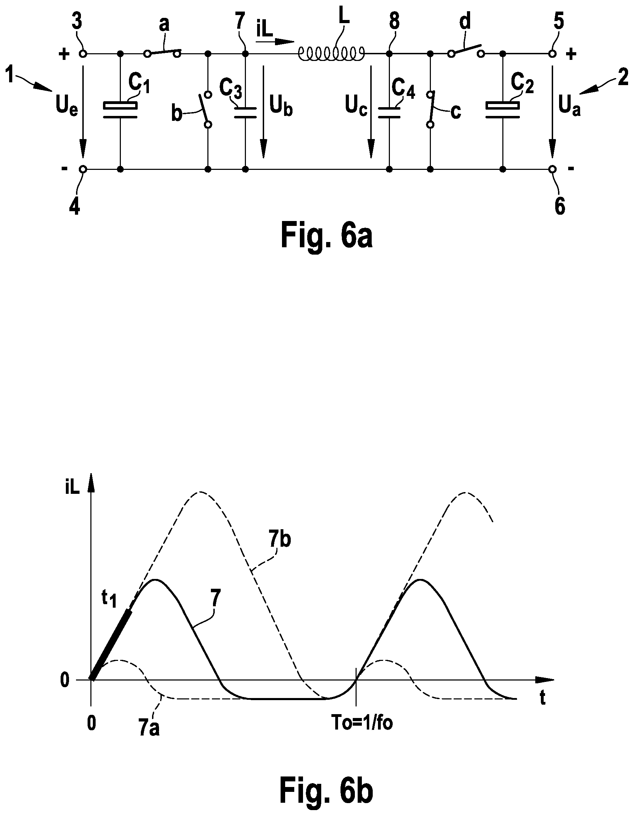

Fig. 6a den Aufwärts-/Abwärts-Wandler in einer ersten Schaltphase;

Fig. 6b den Stromverlauf während der Schaltphase von Fig. 6a;

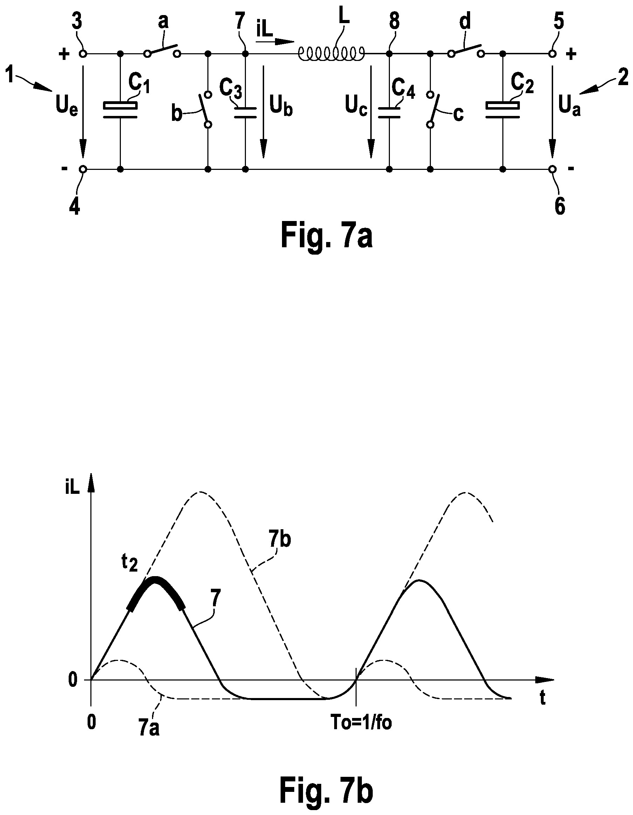

Fig. 7a den Aufwärts-/Abwärts-Wandler in einer zweiten Schaltphase;

Fig. 7b den Stromverlauf während der zweiten Schaltphase;

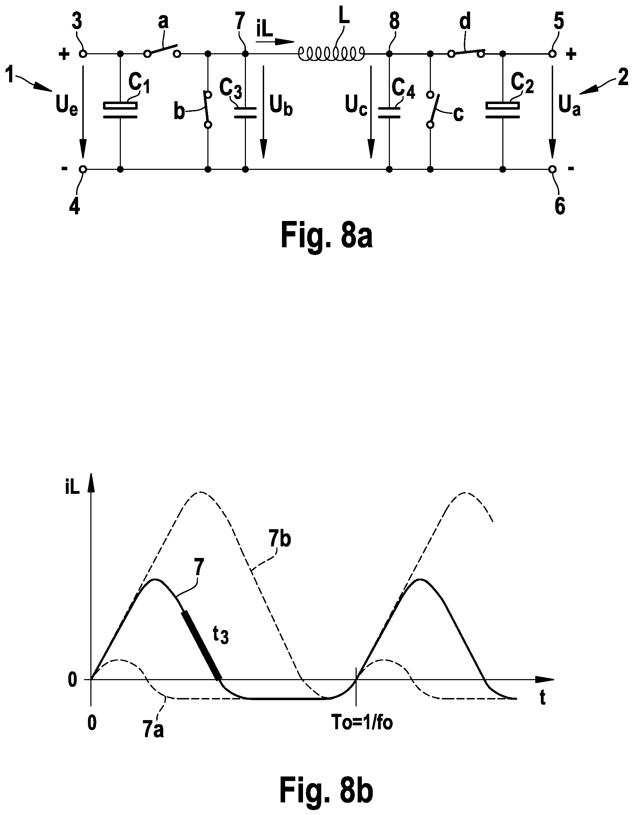

Fig. 8a den Aufwärts-/Abwärts-Wandler in einer dritten Schaltphase;

Fig. 8b den Stromverlauf in der dritten Schaltphase;

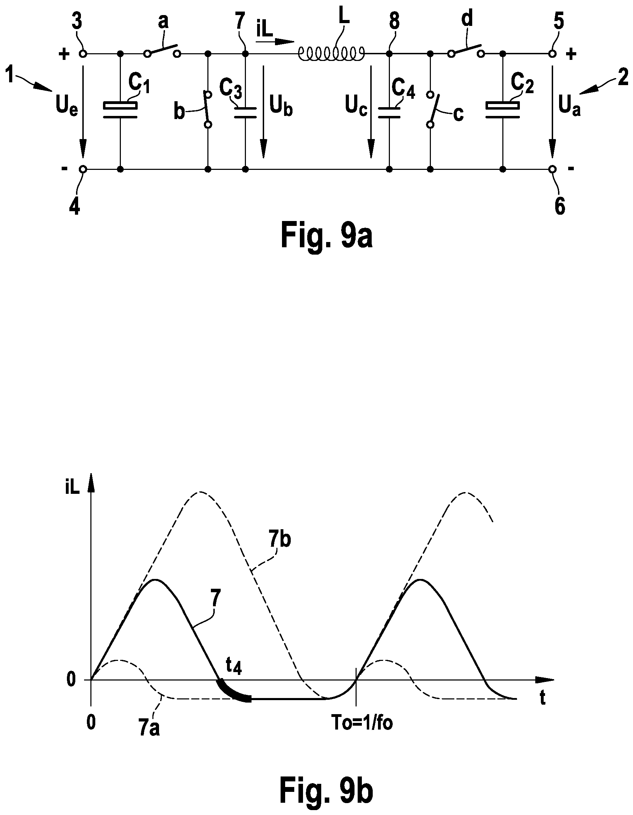

Fig. 9a den Aufwärts-/Abwärts-Wandler in einer vierten Schaltphase;

Fig. 9b den Stromverlauf in der vierten Schaltphase;

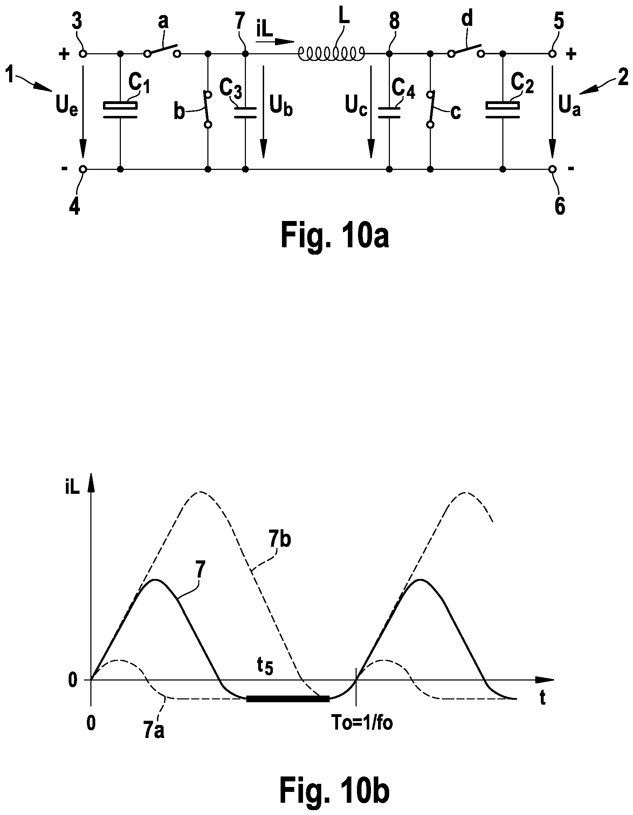

Fig. 10a den Aufwärts-/Abwärts-Wandler in einer fünften Schaltphase;

Fig. 10b den Stromverlauf in der fünften Schaltphase;

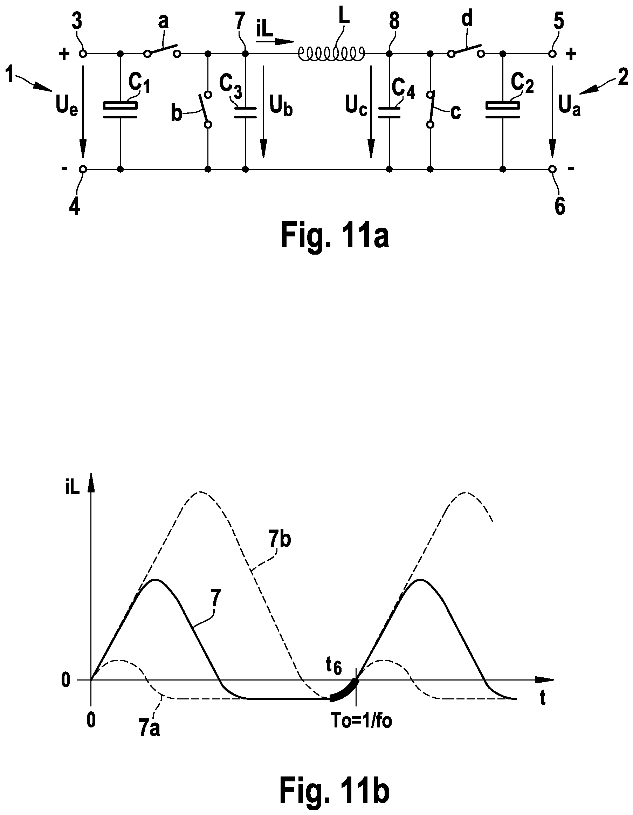

Fig. 11a den Aufwärts-/Abwärts-Wandler in einer sechsten Schaltphase;

Fig. 11b den Stromverlauf in der sechsten Schaltphase;

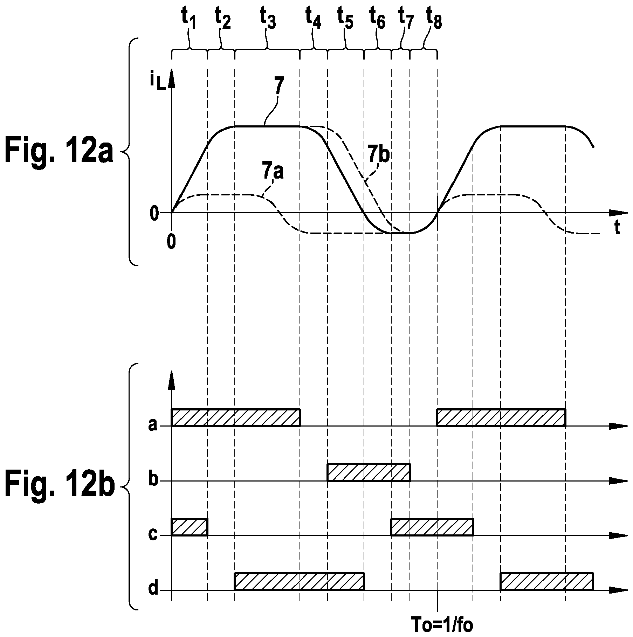

Fig. 12a den Stromverlauf des Induktivitätstroms bei einer anderen Betriebsart; und

Fig. 12b die Schaltzustände der einzelnen Schalter während eines Taktzyklus.

Bezüglich der Erläuterung der Fig. 1 bis 3 wird auf die Beschreibungseinleitung verwiesen.

Fig. 4 zeigt ein Ausführungsbeispiel eines Aufwärts-/Abwärts-Wandlers 10, der eine Eingangsspannung $U_e$ in eine vorgegebene Ausgangsspannung wandelt, die größer oder kleiner als die Eingangsspannung $U_e$ sein kann. Ein solcher DC/DC-Wandler wird auch als Buck/Boost-Wandler bezeichnet. Der Wandler 10 umfasst eine zwischen einen eingangsseitigen Leistungsanschluss 3 und einen ausgangsseitigen Leistungsanschluss 5 geschaltete Induktivität L, die abwechselnd magnetisiert und entmagnetisiert wird. Hierzu umfasst der Wandler 10 mehrere Schalter a-d, mit denen die Induktivität L wahlweise gegen ein Leistungspotential (Knoten 3 bzw. 5) oder ein Bezugspotential (Knoten 4 bzw. 6) geschaltet werden kann. Der Wandler 10 umfasst eingangsseitig einen ersten Schalter a, der die Induktivität L gegen das Leistungspotential am Knoten 3 schaltet, eine zweiten Schalter b, der die Induktivität L gegen das Bezugspotential am Knoten 4 schaltet, und ausgangsseitig einen entsprechenden dritten c und vierten Schalter d. Die einzelnen Schalter a-d werden von einem Spannungsregler (nicht gezeigt) entsprechend angesteuert.

Darüber hinaus sind zwei Umlade-Kondensatoren $C_3$ bzw. $C_4$ vorgesehen, die eingangsseitig bzw. ausgangsseitig, parallel zu den Schaltern b bzw. c angeschlossen sind und dazu dienen, das an den Knoten 7,8 anliegende Potential auf die Eingangsspannung $U_e$ bzw. die Ausgangsspannung $U_a$ zu heben oder das Potential auf das Bezugspotential zu senken. Parallel zum Eingang 1 bzw. Ausgang 2 ist ferner jeweils ein Glättungskondensator $C_1$ bzw. $C_2$ geschaltet.

Fig. 5a zeigt einen typischen Stromverlauf $i_L$ durch die Induktivität L, wie er z.B. im Aufwärts-Betrieb (Boost-Betrieb) des Wandlers auftritt. Dabei gilt $U_a > U_e$. Der Stromverlauf 7 ist periodisch mit einer Periodendauer $T = 1/f$. Wie zu erkennen ist, fließen innerhalb einer Schaltperiode T sowohl positive als auch negative Ströme $i_L$ durch die Induktivität L.

Fig. 5b zeigt die einzelnen Schaltzustände der Schalter a-d im Aufwärts-Betrieb. Der Zustand high bedeutet dabei "Schalter geschlossen" und der Zustand low "Schalter geöffnet".

Die einzelnen Schaltphasen $t_1$-$t_6$ werden im Folgenden anhand der Fig. 6 bis 11 beispielhaft näher erläutert.

Fig. 6a zeigt den Schaltzustand der Schalter a-d in einer ersten Phase $t_1$ (siehe Fig. 5a), in der die Induktivität L magnetisiert wird. In dieser Phase $t_1$ sind die Schalter a und c geschlossen und die Schalter b und d geöffnet (siehe auch Fig. 5b). Durch die Induktivität L fließt ein linear zunehmender Strom $i_L$, der gegen das Bezugspotential (Masse) fließt. Die Induktivität L wird dabei magnetisiert. Fig. 6b zeigt die zugehörige Phase $t_1$ im Stromverlauf 7.

Fig. 7a zeigt den Schaltzustand der Schalter a-d in der nächsten Phase $t_2$, in der die Kondensatoren $C_3$ und $C_4$ umgeladen werden. In dieser Phase gehen die bisher geschlossen Schalter a und c in den geöffneten Zustand, und die Schalter b und d bleiben weiterhin geöffnet. Dadurch wird der Kondensator $C_4$ aufgeladen und der Kondensator $C_3$ entladen (Umladephase). Es fließt weiterhin Strom $i_L$ durch die Induktivität L, der jedoch einen Maximalwert erreicht und dann wieder abnimmt (siehe Fig. 7b).

Wenn die am Kondensator $C_4$ abfallende Spannung $U_c$ den Wert der Ausgangsspannung $U_a$ erreicht hat, wird der Schalter d geschlossen, und wenn die am Kondensator $C_3$ abfallende Spannung $U_b$ den Wert Null erreicht hat wird der Schalter b geschlossen. Dieser Zustand ist in Fig. 8a dargestellt. In beiden Fällen kann der Schaltvorgang spannungsfrei erfolgen, da die über dem Schalter d bzw. b abfallende Spannung zum Schaltzeitpunkt gleich Null ist. Die Induktivität L wird nach dem Schalten der Schalter b und d entmagnetisiert. Fig. 8b zeigt die zugehörige Phase $t_3$ im Stromverlauf $i_L$.

Fig. 9a zeigt den Schaltzustand der Schalter a-d in der nächsten Phase $t_4$, in der der Kondensator $C_4$ von der Spannung $U_a$ auf 0 V umgeladen wird. Der Schalter d wird am Ende der vorhergehenden Phase $t_3$ erst dann geöffnet, wenn der Stromverlauf $i_L$ durch die Induktivität L leicht negativ ist. Der Kondensator $C_4$ entlädt sich danach über den Schalter b, wodurch ein negativer Strom $i_L$ durch die Induktivität L fließt, der sich langsam abschwächt. Der entsprechende Stromverlauf $i_L$ in dieser Phase $t_4$ ist in Fig. 9b dargestellt.

In der nächsten Phase $t_5$ wird der negative Strom $i_L$ gespeichert. Wenn die am Kondensator $C_4$ abfallende Spannung den Wert Null erreicht, wird der Schalter c geschlossen. Dieser Zustand ist in Fig. 10a dargestellt. Der Strom $i_L$ fließt dann quasi im Kreis und ist somit gespeichert. Fig. 10b zeigt den zugehörigen Stromverlauf $i_L$ in der Phase $t_5$.

Fig. 11a zeigt die Schaltstellung der Schalter a-d in einer folgenden Phase $t_6$, in der der Kondensator $C_3$ auf die Eingangsspannung $U_e$ aufgeladen wird. Hierzu wird der Schalter b geöffnet, während der andere Schalter c geschlossen bleibt. Der Kondensator $C_3$ lädt sich dabei stetig auf. Wenn die Spannung $U_b$ die Eingangsspannung $U_e$ erreicht hat, wird der Schalter a wiederum geschlossen und es beginnt eine neue Taktperiode mit der Magnetisierung der Induktivität L.

Fig. 12a und 12b zeigen den Stromverlauf $i_L$ und die Schaltzustände der einzelnen Schalter a-d bei einer anderen Betriebsart des DC/DC-Wandlers von Fig. 4, in der die Ausgangsspannung $U_a$ etwa gleich der Eingangsspannung $U_e$ ist. Der Stromverlauf $i_L$ umfasst hier eine Magnetisierungsphase $t_1$, gefolgt von einer Umladephase $t_2$, einer Entmagnetisierungsphase $t_3$, einer weiteren Umladephase $t_4$, einer weiteren Entmagnetisierungsphase $t_5$, einer Umladephase $t_6$, einer Speicherphase $t_7$ und einer weiteren Umladephase $t_8$. Der Stromverlauf $i_L$ ist im Mittel größer Null, so dass elektrische Leistung vom Eingang 1 zum Ausgang 2 transportiert wird. Der Stromverlauf kann zwischen einer maximalen Grenzlast 7b und einer minimalen Last 7a (Leerlauf) variiert werden.

**Patentansprüche**

1. Schaltnetzteil zum Wandeln einer Eingangsspannung ($U_e$) in eine Ausgangsspannung ($U_a$), das wahlweise im Aufwärts- oder Abwärtsbetrieb betrieben werden kann und wenigstens eine zwischen einen eingangsseitigen Leistungsanschluss (3) und einen ausgangsseitigen Leistungsanschluss (5) geschaltete Induktivität (L) und mehrere Schalter (a-d) umfasst, mit denen die Induktivität (L) wahlweise gegen ein Leistungspotential (3, 5) oder ein Referenzpotential (4, 6) geschaltet werden kann, wobei der erste Schalter (a) die Induktivität (L) gegen das Leistungspotential am eingangsseitigen Leistungsanschluss (3) schaltet und der zweiten Schalter (b) die Induktivität L gegen das Referenzpotential (4) schaltet und ausgangsseitig ein dritter (c) und vierter Schalter (d) vorhanden ist, wobei zwei Umlade-Kondensatoren ($C_3$) bzw. ($C_4$) vorgesehen, die eingangsseitig bzw. ausgangsseitig, parallel zu den zweiten bzw. dritten Schalter (b, c) angeschlossen sind und dazu dienen, das an den Klemmen (7, 8) der Induktivität (L) (7, 8) anliegende Potential auf die Eingangsspannung $U_e$ bzw. die Ausgangsspannung $U_a$ zu heben oder das Potential auf das Bezugspotential zu senken und wenigstens einer der Schalter (a-d) nur geschaltet wird, wenn er im Wesentlichen spannungsfrei ist, wobei die Schalter (a-d) von einem Spannungsregler entsprechend angesteuert werden.

2. Schaltnetzteil nach Anspruch 1, **dadurch gekennzeichnet, dass** die Schalter (a-d) derart geschaltet werden, dass innerhalb einer Schaltperiode (T) sowohl positive als auch negative Ströme ($i_L$) durch die Induktivität (L) fließen.

3. Schaltnetzteil nach Anspruch 1 oder 2, **dadurch gekennzeichnet, dass** alle Schalter (a-d) innerhalb einer Periode (T) geschaltet werden.

4. Schaltnetzteil nach einem der Anspruch 3, **dadurch gekennzeichnet, dass** das Schaltnetzteil (10) einen ersten ($C_1$) und zweiten Kondensator ($C_2$) umfasst, die parallel zum zweiten (b) bzw. dritten Schalter (c) jeweils gegen das Bezugspotential (4,6) geschaltet sind.

5. Schaltnetzteil nach Anspruch 4, **dadurch gekennzeichnet, dass** die Schalter (a-d) derart betrieben werden, dass die Induktivität (L) in einer ersten Phase ($t_1$) magnetisiert, einer der Kondensatoren ($C_1$,$C_2$) in einer zweiten Phase ($t_2$) umgeladen, und die Induktivität (L) in einer nachfolgenden dritten Phase ($t_3$) entmagnetisiert wird.

6. Schaltnetzteil nach Anspruch 3 oder 4, **dadurch gekennzeichnet, dass** alle vier Schalter (a-d) nur geschaltet werden, wenn sie spannungsfrei sind.

7. Verfahren zum Betreiben eines Schaltnetzteils nach Anspruch 1, **dadurch gekennzeichnet, dass** wenigstens einer der Schalter (a-d) nur geschaltet wird, wenn er im Wesentlichen spannungsfrei ist und die Schalter (a-d) derart geschaltet werden, dass innerhalb einer Schaltperiode (T) sowohl positive als auch negative Ströme ($i_L$) durch die Induktivität (L) fließen.

8. Verfahren nach Anspruch 7, **dadurch gekennzeichnet, dass** das Schaltnetzteil (10) eingangsseitig einen ersten Schalter (a), der die Induktivität (L) gegen das Leistungspotential (3) schaltet, und einen zweiten Schalter (d), der die Induktivität (L) gegen das Bezugspotential (4) schaltet, und ausgangsseitig einen entsprechenden dritten (c) und vierten Schalter (d) umfasst, wobei das Schaltnetzteil (10) derart betrieben wird, dass alle Schalter (a-d) innerhalb einer Periode (T) geschaltet werden.

9. Verfahren nach Anspruch 8, **dadurch gekennzeichnet, dass** die Schalter (a-d) derart betrieben werden, dass die Induktivität (L) in einer ersten Phase ($t_1$) magnetisiert, ein Kondensator ($C_1$, $C_2$), der parallel zum zweiten (b) bzw. dritten Schalter (c) geschaltet ist, in einer zweiten Phase ($t_2$) umgeladen, und die Induktivität (L) in einer nachfolgenden dritten Phase ($t_3$) entmagnetisiert wird.

**Claims**

1. Switched-mode power supply for converting an input voltage ($U_e$) to an output voltage ($U_a$), which can be operated selectively in boost or buck operation and comprises at least one inductance (L), which is connected between an input-side power connection (3) and an output-side power connection (5), and a plurality of switches (a-d), by way of which the inductance (L) can be selectively connected to a power potential (3, 5) or a reference potential (4, 6), wherein the first switch (a) connects the inductance (L) to the power potential at the input-side power connection (3) and the second switch (b) connects the inductance (L) to the reference potential (4) and a third (c) and fourth switch (d) are present on the output side, wherein two charge-reversal capacitors ($C_3$) and ($C_4$), respectively, are provided, which are connected on the input side and the output side, respectively, in parallel with the second and third switch (b, c), respectively, and serve to raise the potential applied to the terminals (7, 8) of the inductance (L) (7, 8) to the input voltage $U_e$ or the output voltage $U_a$, respectively, or serve to reduce the potential to the reference potential and at least one of the switches (a-d) is switched only when it is substantially free of voltage, wherein the switches (a-d) are actuated accordingly by a voltage regulator.

2. Switched-mode power supply according to Claim 1, **characterized in that** the switches (a-d) are switched in such a way that both positive and negative currents ($i_L$) flow through the inductance (L) within a switching period (T).

3. Switched-mode power supply according to Claim 1 or 2, **characterized in that** all the switches (a-d) are switched within a period (T).

4. Switched-mode power supply according to one of Claim 3, **characterized in that** the switched-mode power supply (10) comprises a first ($C_1$) and second capacitor ($C_2$), which are connected in parallel with the second (b) and third switch (c), respectively, in each case to the reference potential (4, 6).

5. Switched-mode power supply according to Claim 4, **characterized in that** the switches (a-d) are operated in such a way that the inductance (L) is magnetized in a first phase ($t_1$), the charge of one of the capacitors ($C_1$, $C_2$) is reversed in a second phase ($t_2$) and the inductance (L) is demagnetized in a subsequent third phase ($t_3$).

6. Switched-mode power supply according to Claim 3 or 4, **characterized in that** all four switches (a-d) are switched only when they are free of voltage.

7. Method for operating a switched-mode power supply according to Claim 1, **characterized in that** at least one of the switches (a-d) is switched only when it is substantially free of voltage and the switches (a-d) are switched in such a way that both positive and negative currents ($i_L$) flow through the inductance (L) within a switching period (T).

8. Method according to Claim 7, **characterized in that** the switched-mode power supply (10) comprises on the input side a first switch (a), which connects the inductance (L) to the power potential (3), and a second switch (d), which connects the inductance (L) to the reference potential (4), and on the output side comprises a corresponding third (c) and fourth switch (d), wherein the switched-mode power supply (10) is operated in such a way that all the switches (a-d) are switched within a period (T).

9. Method according to Claim 8, **characterized in that** the switches (a-d) are operated in such a way that the inductance (L) is magnetized in a first phase ($t_1$), the charge of a capacitor ($C_1$, $C_2$), which is connected in parallel with the second (b) or third switch (c), is reversed in a second phase ($t_2$) and the inductance (L) is demagnetized in a subsequent third phase ($t_3$).

## Revendications

1. Bloc d'alimentation à découpage permettant de convertir une tension d'entrée ($U_e$) en une tension de sortie ($U_a$), qui peut être utilisée soit en mode ascendant soit en mode descendant et qui comprend au moins une inductance (L) connectée entre une borne de puissance côté entrée (3) et une borne de puissance côté sortie (5) et plusieurs commutateurs (a-d) au moyen desquels l'inductance (L) peut être commutée sélectivement contre un potentiel de puissance (3, 5) ou un potentiel de référence (4, 6), dans lequel le premier commutateur (a) commute l'inductance (L) contre le potentiel de puissance au niveau de la borne d'alimentation côté entrée (3) et le deuxième commutateur (b) commute l'inductance L contre le potentiel de référence (4), et dans lequel un troisième (c) et un quatrième commutateurs (d) sont présents côté sortie, dans lequel il est prévu deux condensateurs de recharge ($C_3$) ou ($C_4$) qui sont respectivement connectés côté entrée ou côté sortie en parallèle avec les deuxième ou troisième commutateurs (b, c) et sont utilisés pour augmenter respectivement le potentiel présent aux bornes (7, 8) de l'inductance L (7, 8) à la tension d'entrée $U_e$ ou à la tension de sortie $U_a$ ou pour abaisser le potentiel au potentiel de référence et au moins l'un des commutateurs (a-d) n'est commuté que s'il est sensiblement hors tension, dans lequel les commutateurs (a-d) sont commandés en conséquence par un régulateur de tension.

2. Bloc d'alimentation à découpage selon la revendication 1, **caractérisé en ce que** les commutateurs (a-d) sont commutés de telle manière que des courants tant positifs que négatifs ($i_L$) circulent dans l'inductance (L) au cours d'une période de commutation (T).

3. Bloc d'alimentation à découpage selon la revendication 1 ou 2, **caractérisé en ce que** tous les commutateurs (a-d) sont commutés au cours d'une période (T).

4. Bloc d'alimentation à découpage selon l'une des revendication 3, **caractérisé en ce que** le bloc d'alimentation à découpage (10) comprend un premier ($C_1$) et un deuxième condensateurs ($C_2$) qui sont respectivement connectés en parallèle avec le deuxième (b) ou le troisième commutateur (c) contre le potentiel de référence (4, 6).

5. Bloc d'alimentation à découpage selon la revendication 4, **caractérisé en ce que** les commutateurs (a-d) fonctionnent de telle manière que l'inductance (L) soit magnétisée lors d'une première phase ($t_1$), que l'un des condensateurs ($C_1$, $C_2$) soit rechargé lors d'une deuxième phase ($t_2$) et que l'inductance (L) soit démagnétisée lors d'une troisième phase suivante ($t_3$).

6. Bloc d'alimentation à découpage selon la revendication 3 ou 4, **caractérisé en ce que** les quatre commutateurs (a-d) ne sont commutés que s'ils sont hors tension.

7. Procédé pour faire fonctionner un bloc d'alimentation à découpage selon la revendication 1, **caractérisé en ce qu'**au moins l'un des commutateurs (a-d) n'est commuté que s'il est sensiblement hors tension et **en ce que** les commutateurs (a-d) sont commutés de telle manière que des courants tant positifs que négatifs ($i_L$) circulent à travers l'inductance (L) au cours d'une période de commutation (T).

8. Procédé selon la revendication 7, **caractérisé en ce que** le bloc d'alimentation à découpage (10) comprend côté entrée un premier commutateur (a) qui commute l'inductance (L) contre le potentiel de puissance (3), et un deuxième commutateur (d) qui commute l'inductance (L) contre le potentiel de référence (4), et côté sortie, un troisième (c) et un quatrième commutateurs (d) correspondants dans lequel le bloc d'alimentation à découpage (10) est utilisé de telle manière que tous les commutateurs (a-d) soient commutés au cours d'une période (T).

9. Procédé selon la revendication 8, **caractérisé en ce que** les commutateurs (a-d) sont utilisés de telle manière que l'inductance (L) soit magnétisée lors d'une première phase ($t_1$), qu'un condensateur ($C_1$, $C_2$) qui est connecté en parallèle avec le deuxième (b) ou le troisième commutateur (c), soit rechargé lors d'une deuxième phase ($t_2$), et que l'inductance (L) soit démagnétisée lors d'une troisième phase suivante ($t_3$).

Fig. 1

Fig. 2

Fig. 3

**Fig. 4**

**Fig. 5a**

**Fig. 5b**

**Fig. 6a**

**Fig. 6b**

**Fig. 7a**

**Fig. 7b**

## Fig. 8a

## Fig. 8b

**Fig. 9a**

**Fig. 9b**

**Fig. 10a**

**Fig. 10b**

**Fig. 11a**

**Fig. 11b**

Fig. 12a

Fig. 12b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0631372 A
- DE 19853626 A1
- US 4931716 A